(19) Europäisches Patentamt
European Patent Office
Office européen des brevets

(11) **EP 2 535 466 B1**

(12) **EUROPEAN PATENT SPECIFICATION**

(45) Date of publication and mention
of the grant of the patent:
**11.12.2013 Bulletin 2013/50**

(51) Int Cl.:
***E02F 3/90*** *(2006.01)*    ***E02F 3/88*** *(2006.01)*

(21) Application number: **12171429.9**

(22) Date of filing: **11.06.2012**

(54) **Position measurement for a suction tube of a dredger vessel**

Positionsmessung für ein Saugrohr eines Baggerschiffs

Mesure de position pour tube d'aspiration d'une cuve de drague

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2011 NL 2006951**

(43) Date of publication of application:
**19.12.2012 Bulletin 2012/51**

(73) Proprietor: **IHC Systems B.V.**
**3361 HJ Sliedrecht (NL)**

(72) Inventor: **de Keizer, Cornelis**
**3328 BC Dordrecht (NL)**

(74) Representative: **Nederlandsch Octrooibureau**
**P.O. Box 29720**
**2502 LS The Hague (NL)**

(56) References cited:
**EP-A1- 0 009 516**    **FR-A5- 2 080 208**
**GB-A- 2 097 839**    **JP-A- 2001 090 101**
**NL-A- 7 408 485**    **US-A- 3 420 318**

**Description**

TECHNICAL FIELD

The invention relates to a method for determining kinematic parameters Q of a cable connecting a suction tube to a dredging vessel, wherein the suction tube is at a tube suspension point connected by the cable to a cable suspension point E on the dredging vessel.

Also, the invention relates to a computer program product configured to provide instructions to carry out a method for determining kinematic parameters Q of a suction tube.

Furthermore, the invention relates to a dredging vessel, comprising a suction tube that is at a tube suspension point connected by a cable to a cable suspension point E on the dredging vessel.

BACKGROUND

In dredging operations with a dredging vessel, accurate knowledge of the position of the suction drag head at the outer end of the dredging vessel's suction tube is desired. Such knowledge may be utilized for increasing dredging accuracy and preventing damage to the suction tube and drag head from unexpected collisions. As an example of this, the suction tube may flex in the athwartship direction toward the dredging vessel's hull under the influence of unexpected undertow or heaving of the water surface. Buckling of the suction tube against the ship hull must be avoided at all costs.

According to a known method of determining the position of the suction tube and suction head, the dredging vessel comprises a suction tube that is at a tube suspension point connected by a cable with a length L to a cable suspension point E on the dredging vessel. This cable suspension point E is located on a gantry carrying the cable, by means of which the suction tube is displaceable between a substantially horizontal rest position and an inclined tube position. The cable passes at the cable suspension point E through a gimbal head, which is free to move in a plane spanned by an athwartship direction X and a vertical direction Z. The angle of the gimbal head in this plane is measured by potentiometers and sent to a computer, yielding an indication of the cable orientation. The cable length L is measured by a line-out counter and also sent to the computer. Constant tension is exerted on the cable, keeping it taut.

The problem of this type of mechanical angle measurement for the cable is that the gimbal head and potentiometers are prone to mechanical wear and malfunctioning, reducing the accuracy and reliability of the method.

EP0009516A1 describes a method for determining the kinetic parameters of a cable connecting a suction tube to a dredging vessel, wherein the suction tube is, at a tube suspension point, connected by the cable to a cable suspension point on the dredging vessel.

SUMMARY

It is an object to provide a method by which the kinematic parameters Q for a cable carrying a dredging vessel's suction tube can be determined in a more robust manner, and to provide a dredging vessel capable of performing such a method.

This object is achieved by providing, in a first aspect, a method according to the preamble of claim 1, that is characterized by - providing a radar source and a radar detector at the dredging vessel, the radar source having a radar emission field directed substantially at the cable; - irradiating the cable with the radar emission field; - receiving a radar reflection field reflected by the cable, using the radar detector, and - determining the kinematic parameters Q from the radar reflection field.

By providing a radar source and radar detector, the orientation of the cable can be derived from the measured radar signal. The location of the pivot connection on the hull and the length of the suction tube are assumed to be known parameters, which, in combination with further parameters for the cable and/or the suction tube, may yield accurate knowledge of the location of the suction head. Advantageously, the radar measurements are carried out on board of the vessel i.e. above the water surface. More generally, various kinematic parameters Q (e.g. position and/or velocity components, radial speed, and/or acceleration components) of the cable can be derived by the radar source and detector located above the water line, yielding a cable orientation measurement system that is less susceptible to water induced wear. Depending on the configuration of the radar source and detector (i.e. the layout and operational characteristics of the radar array), the radar measurement may involve only closest distance point measurements, line measurements, or even three-dimensional cable position imaging.

In further embodiments of the method, other parameters are measured that constitute restrictions or boundary conditions to the kinematic parameters Q of the cable. By combining the kinematic parameters of the cable derived from the radar measurement with other (linear independent) measurements, the position of the suction tube and head may ultimately be determined. Iterative three-dimensional calculation methods may be used in the required calculations, optionally supplemented by averaging or filtering in order to compensate for measurement errors.

In particular, according to a further embodiment of the method, the dredging vessel is provided with means for determining a cable length L between the tube suspension point and the cable suspension point E, wherein determining the kinematic parameters Q comprises: - determining the cable length L of the cable.

Advantageously, length L of the cable between the cable suspension point and the tube suspension point provides additional information in determining the kinematic parameters Q of the cable. The kinematic parameters Q for the cable and the cable length L may constitute a parameter set sufficient for calculating positional information of the suction tube and head. Known goniometric transformations may be used in combining the radar measurements with measurements of the cable length L for determining the kinematic parameters Q.

Also, according to a further embodiment of the method, the suction tube is provided with at least one tube goniometer, wherein determining the kinematic parameters Q comprises: - determining at least an inclination angle $\chi$ between a longitudinal tube axis S 1 of the suction tube and a longitudinal vessel axis S2 of the dredger hull, for the suction tube in the inclined tube position.

Advantageously, the inclination angle $\chi$ provides additional information for improving the determination accuracy of the kinematic parameters Q. Measurement of the inclination angle $\chi$ may replace or supplement measurement of the cable length L in determining the kinematic parameters Q. The kinematic parameters Q for the cable and at least the inclination angle $\chi$ of the suction tube may constitute a parameter set sufficient for calculating positional information of the suction tube and head. Known goniometric transformations may be used in combining the radar measurements with measurements of the inclination angle $\chi$ for determining the kinematic parameters Q.

According to yet a further embodiment of the method, the suction tube is provided with a pressure sensor wherein determining the kinematic parameters Q comprises: - measuring a pressure P by means of the pressure sensor, and - calculating the depth of a suction head at a second tube end of the suction tube.

Advantageously, the depth of the suction head during dredging from pressure sensor measurements provides additional information for improving the determination accuracy of the kinematic parameters Q. Measurement of the depth of the suction head may replace or supplement measurement of the cable length L and/or measurement of the inclination angle $\chi$ in determining the kinematic parameters Q. The kinematic parameters Q for the cable and at least the depth of the suction head may constitute a parameter set sufficient for calculating positional information of the suction tube and head.

According to an embodiment of the method, the cable is essentially straight during use, wherein determining the kinematic parameters Q comprises: - determining from the radar reflection field an indication of a cable distance AD between a detector reference point A on the radar detector, and a cable region D on the cable.

With the assumption that the cable is essentially straight, the indication of the cable distance AD for a particular cable region is a representative parameter for the orientation of the cable. Determination of the indication of the cable distance from the measured radar reflection field greatly simplifies the determination of the suction tube kinematic parameters Q. A generic cable region is intended here, which may be any preferred region, for example a closest cable region or a different cable region that may be identifiable in some other way.

According to yet a further embodiment of the method, irradiating the cable with the radar emission field comprises emitting an emission field main lobe of the radar emission field substantially perpendicular to a dredger hull of the dredging vessel, toward the cable, and along a main detector axis of the radar detector, wherein the cable region D is the closest cable region F, and wherein the cable distance AD is a shortest distance AF between the detector reference point A and the closest cable region F.

By emitting a main field lobe from the radar source in a direction that is substantially perpendicular to the dredging vessel hull and directed toward the cable, the deflection of the cable in the athwartship direction perpendicular to the hull surface can be efficiently determined. The shortest distance between the radar detector reference point and the closest cable region is a preferred parameter, for it is relatively easily identifiable even in one-dimensional radar positional measurements.

According to a further embodiment of the method, the cable has a vertical component in a vertical direction Z perpendicular to both an athwartship direction X and an alongship direction Y, the method comprising: - determining an athwartship vertical cable heaving angle $\beta$, from the shortest radar distance AF, a projected horizontal distance AB between detector reference point A and the cable suspension point E, and a projected vertical distance BE between the detector reference point A and the cable suspension point E.

The athwartship vertical cable heaving angle is an unambiguous parameter for describing the athwartship deflection of the cable and the suction tube (i.e. the horizontal deflection in the athwartship direction X with respect to the initial axis along the vertical direction Z).

According to a further embodiment of the method, determining the athwartship vertical cable heaving angle $\beta$ comprises solving an equation:

$$\beta = \arcsin\left(\frac{AF}{\sqrt{AB^2 + BE^2}}\right) - \arcsin\left(\frac{AB}{\sqrt{AB^2 + BE^2}}\right)$$

The athwartship vertical cable heaving angle can in any case be efficiently calculated with this goniometric equation.

According to an embodiment of the method, the detection field main lobe has a characteristic half beam width angle $\alpha$, wherein determining the athwartship vertical cable heaving angle $\beta$ comprises solving an alternative equation:

$$\beta = \arctan\left(-\frac{AB - AF \cdot \cos(\alpha)}{BE - AF \cdot \sin(\alpha)}\right)$$

if the athwartship vertical cable heaving angle $\beta$ is larger than the characteristic half beam width angle $\alpha$.

In case the athwartship vertical cable heaving angle is larger than the characteristic half beam width angle (e.g. the characteristic radar beam width for which the local field intensity is half of the maximum field intensity i.e. the -3dB width), then the shortest radar distance is in the above equation defined by substituting the actual closest cable region with the cable region that is located on a vertical edge of the emission field main lobe corresponding to the characteristic vertical half beam width angle. This approximation greatly simplifies calculation, circumventing the need for complicated radar side lobe measurement corrections.

According to a further embodiment of the method, the dredging vessel comprises a gantry by means of which the suction tube is displaceable between a substantially horizontal rest position and an inclined tube position during dredging, wherein the method comprises: - directing the emission field main lobe at the cable, and - directing a main detector axis of the radar detector at the cable, when the suction tube is in the inclined tube position.

By directing both the emission field main lobe of the radar source and the main detector axis of the radar detector at the cable while it retains the suction tube in the inclined position, the tilted cable will generate a significant radar reflection field returning to the radar detector. The inclined tube position of the suction tube during dredging corresponds to the operational situation in which knowledge of the kinematic parameters Q of the cable (and of the suction tube) is highly desired.

According to a further embodiment of the method, the radar detector is provided at a vessel location on the dredging vessel, and wherein the method comprises: - providing a further radar detector at a further vessel location, different from the vessel location; -receiving a radar reflection field reflected by the cable, using the radar detector, and - receiving a further radar reflection field reflected by the cable, using the further radar detector; - determining the kinematic parameters Q from the radar reflection field and the further radar reflection field.

Accuracy of the position determination for the cable is greatly improved by employing cross bearing radar measurements, using the combined measurement information of the radar detector and the further radar detector. The correlation based on the known vessel locations at which the radar detectors are placed will yield an accurate position for the cable region, even if the radar detector and further radar detector are only able to detect radial distances.

According to a further embodiment of the method, the suction tube comprises a plurality of suction tube segments, wherein each suction tube segment is pivotably interconnected with an adjacent suction tube segment, and is at a respective tube segment suspension point connected by a respective cable to a respective cable suspension point, wherein the actions of: a) providing a respective radar source and a respective radar detector at the dredging vessel, the respective radar source having a respective radar emission field directed substantially at the respective cable; b) irradiating the respective cable with the respective radar emission field; c) receiving a respective radar reflection field reflected by the respective cable, using the respective radar detector, and d) determining the respective kinematic parameters Q' from the respective radar reflection field, are executed for each subsequent suction tube segment, starting from a first suction tube segment that is at a first tube end connected to a dredger hull of the dredging vessel.

The entire set of kinematic parameters of the suction tube consisting of consecutive pivotable tube segments (which are assumed to be rigid) may be determined by sequentially calculating the kinematic parameters Q' of the respective cables of each suction tube segment. As adjacent suction tube segments are pivotably connected, the calculation may start at the known connection point (e.g. the pivot connection) between the first suction tube segment and the dredger hull. Applying the method on the cable of the first suction tube segment will yield the required knowledge for calculating the kinematic parameters Q' of the cable of the second suction tube segment, and so on, allowing the method to be applied to rigid but segmented suction tubes.

According to another aspect and in accordance with the effects and advantages described above, a computer program product configured for carrying out any one of the method embodiments is provided.

# EP 2 535 466 B1

In yet another aspect and having the effects and advantages described above, a dredging vessel is provided according to the preamble of claim 15, characterized in that the dredging vessel comprises a radar source and a radar detector, wherein the radar source is arranged for generating a radar emission field directed substantially at the cable, and wherein the radar detector is arranged for receiving a radar reflection field reflected by the cable, and wherein the dredging vessel comprises a computer arrangement configured for determining kinematic parameters Q of the cable from the radar reflection field.

In particular, according to a further embodiment, the dredging vessel is provided with means for determining a cable length L between the tube suspension point and the cable suspension point E, and wherein the computer arrangement is configured for determining the kinematic parameters Q from the cable length L in addition to the radar reflection field.

Advantageously, length L of the cable between the cable suspension point E and the tube suspension point provides additional information in determining the kinematic parameters Q of the cable. The kinematic parameters Q for the cable and the cable length L may constitute a parameter set sufficient for calculating positional information of the suction tube and head.

According to another further embodiment of the dredging vessel, the suction tube comprises at least one tube goniometer for determining an inclination angle $\chi$ between a longitudinal tube axis S 1 of the suction tube and a longitudinal vessel axis S2 of the dredger hull, for the suction tube in the inclined tube position, and wherein the computer arrangement is configured for determining the kinematic parameters Q from the inclination angle $\chi$ in addition to the radar reflection field.

Advantageously, the inclination angle $\chi$ provides additional information for improving the determination accuracy of the kinematic parameters Q. Measurement of the inclination angle $\chi$ may replace or supplement measurement of the cable length L in determining the kinematic parameters Q of the cable. The kinematic parameters Q for the cable and at least the inclination angle $\chi$ of the suction tube may constitute a parameter set sufficient for calculating positional information of the suction tube and head.

According to yet another further embodiment of the dredging vessel, the suction tube comprises a pressure sensor for measuring a pressure P near a suction head at a second tube end of the suction tube, and wherein the computer arrangement is configured for calculating a depth of the suction head and for determining the kinematic parameters Q from the calculated depth in addition to the radar reflection field.

Using the pressure P provides an indication of the depth of the known location of the pressure sensor on the suction tube. This depth parameter may supplement or replace the measurement of the cable length L and/or the inclination angle $\chi$ in calculating positional information of the suction tube and head.

According to a further embodiment of the dredging vessel, the radar detector is provided at a vessel location on the dredging vessel, and wherein the dredging vessel comprises a further radar detector at a further vessel location different from the vessel location, wherein the further radar detector is arranged for receiving a further radar reflection field reflected by the cable, and wherein the computer arrangement is configured for determining kinematic parameters Q from both the radar reflection field and the further radar reflection field.

According to yet a further embodiment of the dredging vessel, the suction tube comprises a plurality of suction tube segments, wherein each suction tube segment is pivotably interconnected with an adjacent suction tube segment, and is at a respective tube segment suspension point connected by a respective cable to a respective cable suspension point, the dredging vessel comprising respective radar sources and respective radar detectors, wherein each respective radar source is arranged for generating a radar emission field directed substantially at the respective cable, and wherein the respective radar detector is arranged for receiving a radar reflection field reflected by the respective cable, and wherein the computer arrangement is configured for determining kinematic parameters Q' of each subsequent suction tube segment, starting from a first suction tube segment that is at a first tube end connected to a dredger hull of the dredging vessel.

BRIEF DESCRIPTION OF THE DRAWINGS

Embodiments will now be described, by way of example only, with reference to the accompanying schematic drawings in which corresponding reference symbols indicate corresponding parts, and in which:

FIG. 1 schematically shows a side view of a dredging vessel;
FIG. 2 presents an athwartship cross-section of a suction dredger vessel;
FIG.3A and 3B illustrate various quantities used in embodiments of a method of determining kinematic parameters of a suction tube;
FIG.4 shows a cross-bearing radar configuration on an embodiment of a dredging vessel, for determining kinematic parameters of the suction tube.

The figures are only meant for illustrative purposes, and do not serve as restriction of the scope or the protection

5

as laid down by the claims.

DETAILED DESCRIPTION

The method and dredging vessel described here are based on the insight that radar measurement may be used to determine kinematic parameters Q of a cable carrying a suction tube of the dredging vessel. In general, radar may be used to determine various kinematic parameters Q of objects that interact with and reflect electromagnetic sources from a radar source back to a radar detector. Exemplary kinematic parameters Q are given by position, orientation, projected distances, velocity, radial speed, etc. Here, at least one cable that connects a movable portion of a suction tube to a suspension point on the dredging vessel is observed by radar measurements, yielding an indication of the suction tube's position. The cable's orientation is a preferred kinematic parameter Q, but knowledge of other parameters like speed or acceleration components may also be useful in certain circumstances. From the kinematic parameters Q of the cable, the position of the suction tube may be derived. The term "suction tube" in the scope of determining its kinematic parameters should be construed as referring both to the suction tube as such, and to the combination of the tube with the suction drag head. Determination of the tube's kinematic parameters thus pertains to obtaining knowledge of any desired point on the suction tube and/or the suction drag head.

The reference system in this description is defined with respect to the hull of the vessel, by the athwartship (transversal) direction X, alongship (centerline) direction Y, and the vertical (upward perpendicular) direction Z. This description utilizes the XYZ-coordinate system, but should not be construed as limiting the invention to this XYZ-coordinate system. Instead, any convenient reference system may be used. If the vessel's position and orientation in earth-centered coordinates is known, then the expressions for the kinematic parameters Q of the cable (or suction tube or drag head) in the vessel reference system can be transformed to the world reference frame. Earth centered coordinates may for instance be obtained from GPS-data of the vessel location, combined with accurate knowledge of the vessel's heading, pitch, and roll.

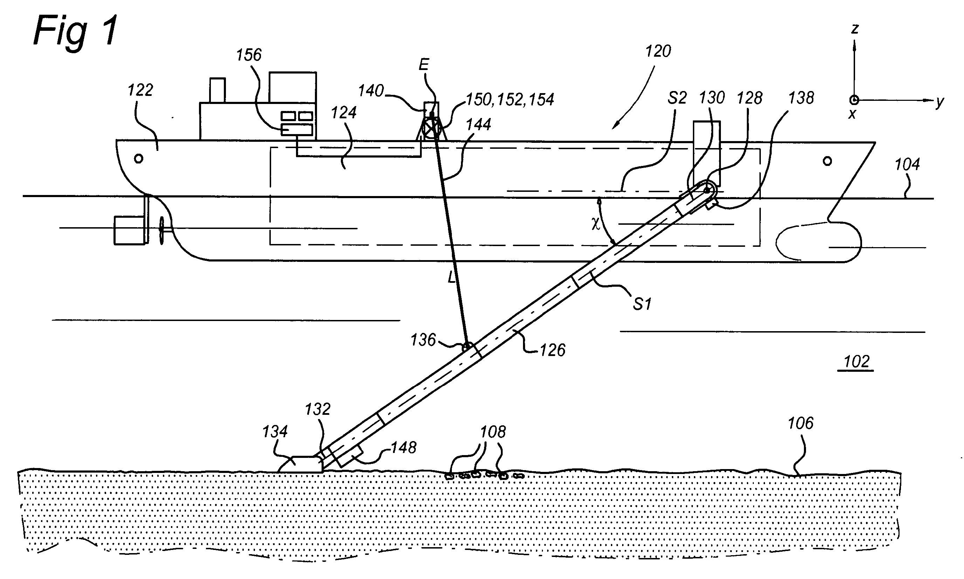

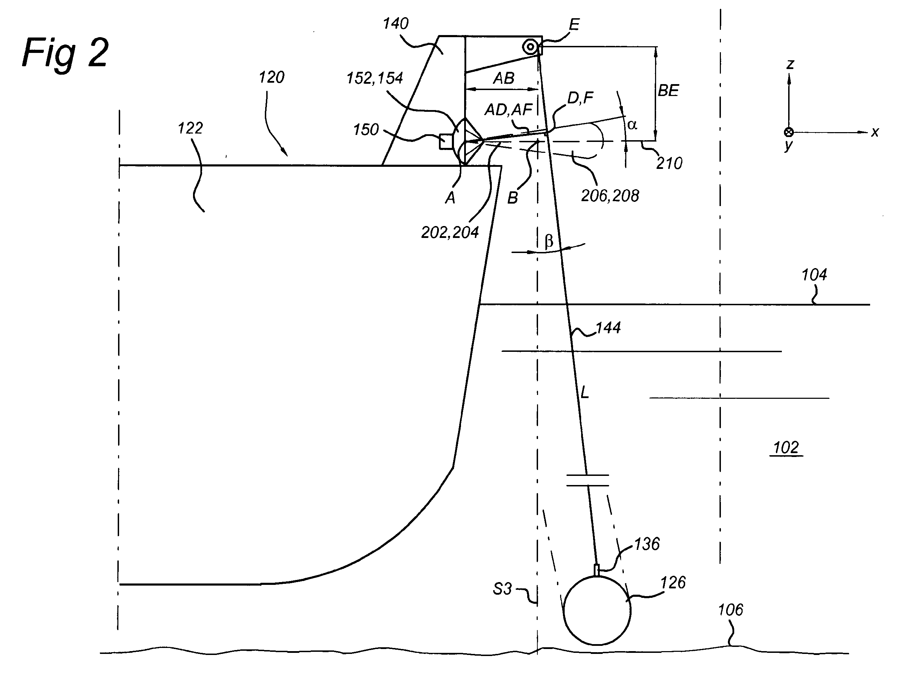

FIG. 1 schematically shows a side view of a suction dredging vessel 120 that is partially submerged in a water column 102 and thus partially below a water surface 104. At the lower boundary of the water column 102 is a bottom surface 106 comprising material 108. The dredging vessel 120 comprises a dredger hull 122 to which a suction tube 126 is connected by means of a pivot connection 128. A first tube end 130 of the suction tube 126 is in fluid connection with a hopper 124 that is at least partially contained by the dredger hull 122. A second tube end 132 of the suction tube 126 is mechanically connected to and in fluid communication with a suction head 134, which can be positioned into a state of contact with the bottom surface 106. In this configuration, the dredging vessel 120 is arranged for removing the material 108 from the bottom surface 106, and transferring the material 108 through the suction head 134, along the suction tube 126 into the hopper 124 by means of a pump which can be located in the suction tube 126 or between the first tube end 130 and the hopper 124. The dredging vessel 120 comprises a suspension device or gantry 140 with a cable 144 that connects the gantry 140 at a cable suspension point E to the suction tube 126 at a tube suspension point 136. The length L of the cable 144 may be varied, resulting in a tilting of the suction tube 126 from a horizontal rest position along a longitudinal vessel axis S2 corresponding to an alongship direction Y, to an inclined tube position corresponding to a tilted longitudinal tube axis S 1. The tilt of the suction tube 126 from the longitudinal vessel axis S2 to the tilted longitudinal tube axis S1 may be described by an alongship tube inclination angle $\chi$. Near the gantry 140, a radar system 150 is provided for observing the cable 144. The radar system 150 comprises a radar source 152 and a radar detector 154, which is further explained with reference to FIG.2.

The suction dredging vessel 120 may be provided with a computer arrangement 156 for controlling the radar source 152 and radar detector 154. In addition, the computer arrangement 156 may be configured for receiving and processing of the measurement signals from the radar detector 154. For this purpose, a computer program product configured to provide instructions to carry out the described method may be loaded on the computer arrangement 156.

FIG.2 shows a cross sectional view in an athwartship direction X of the dredging vessel 120 that is provided with the radar system 150. The gantry 140 is located on or near a deck edge of the dredger hull 122, and carries the cable 144 that is suspended from the cable suspension point E, which is shown in an overboard position. At a cable end, the cable 144 is connected to the tube suspension point 136. The length L of the cable 144 extending between the cable suspension point E and the tube suspension point 136 may be determined by methods that are generally known, for instance by monitoring the revolutions of a winch giving out the cable 144. For this purpose, the dredging vessel 120 is provided with means for determining the cable length L between the tube suspension point 136 and the cable suspension point E, and the computer arrangement 156 is configured for determining the kinematic parameters Q from the cable length L in addition to the radar reflection field 204.

As shown in FIG.2, the radar system 150 is located near the gantry 140, and comprises the radar source 152 and the radar detector 154. With the radar source 152, a radar emission field 202 can be generated and directed at the cable 144. The cable 144 may be made of twined strands of a strong metal. Irradiation of the cable 144 by the radar emission field 202 will then induce a radar reflection field 204 reflected by the cable 144. At least a portion of the radar reflection field 204 can be received by means of the radar detector 154. By processing the received radar reflection field 204, the position and/or orientation of the cable 144 may be determined, which may be used in combination with the cable length L to derive the position of the suction tube 126.

Accordingly, a method for determining kinematic parameters Q of the cable carrying the suction tube 126 of the dredging vessel 120 comprises the actions of:

- providing the radar source 152 and the radar detector 154 at the dredging vessel 120, the radar source 152 having the radar emission field 202 directed substantially at the cable 144;
- irradiating the cable 144 with the radar emission field 202;
- receiving the radar reflection field 204 reflected by the cable 144, using the radar detector 154, and
- determining the kinematic parameters Q from the radar reflection field 204.

In this case, the cable length L is used in combination with the kinematic parameters Q of the cable 144 to derive further kinematic parameters q of the suction tube 126. So, a corresponding method for determining further kinematic parameters q of the suction tube 126 of the dredging vessel 120 may be defined. According to this corresponding method, the suction tube 126 is at the tube suspension point 136 connected by the cable 144 to the cable suspension point E on the dredging vessel 120, the method comprising the actions of:

- providing a radar source 152 and a radar detector 154 at the dredging vessel 120, the radar source 152 having a radar emission field 202 directed substantially at the cable 144;
- irradiating the cable 144 with the radar emission field 202;
- receiving a radar reflection field 204 reflected by the cable 144, using the radar detector 154;
- measuring the cable length L of the cable 144, and
- determining the further kinematic parameters q from the radar reflection field 204 and the cable length L.

Alternatively of in addition, other measurements may be used to refine the results of the method of determining the kinematic parameters Q of the cable, or as boundary conditions for the corresponding method of determining the further kinematic parameters q of the suction tube 126.

For example, the suction tube 126 may be provided with at least one tube goniometer 138. The method of determining the kinematic parameters Q or the further kinematic parameters q may then be augmented by supplementing the radar measurements with angle measurements from the at least one tube goniometer 138. The method of determining the kinematic parameters Q may thus comprise determining at least an inclination angle $\chi$ between a longitudinal tube axis S1 of the suction tube 126 and a longitudinal vessel axis S2 of the dredger hull 122, for the suction tube 126 in the inclined tube position. Alternatively or in addition to means for measuring the cable length L and/or the inclination angle $\chi$, the suction tube 126 may be provided with a pressure sensor 148 as a supplement to the radar measurement. Determining the kinematic parameters Q or the further kinematic parameters q may then be extended by measuring the pressure P, calculating the corresponding depth of the suction tube 126 at the sensor site, and relating this pressure P to the depth of the suction head 134.

Thus, both the method of determining the kinematic parameters Q of the cable, and the corresponding method of determining the further kinematic parameters q may comprise any or all of measurements of the cable length L, the inclination angle $\chi$, and the pressure P (related suction tube depth). The iterative method described and/or tracking filters based on goniometric transformations may be used for combining the radar measurements with measurements of the cable length L, the inclination angle $\chi$, or the pressure P.

In general, various components of the radar system 150 may be at a single location or be distributed over multiple locations of the dredging vessel 120, above the water surface 104, and preferably near the cable 144. The radar source 152 and radar detector 154 are less susceptible to water induced wear if located above the water surface 104. The radar system 150 may have a monostatic or bistatic configuration (i.e. radar source 152 and radar detector 154 coinciding or in distinct locations respectively), and/or may consist of one or multiple radar sources 152 and/or radar detectors 154 (e.g. a single cone beam radar, or a phased array radar). Depending on the chosen layout and operational characteristics of the radar system 150, the radar measurements may involve only closest distance point measurements, line measurements, or even three-dimensional cable imaging. The exemplary radar system 150 shown in FIGs.1 and 2 depict a monostatic cone beam radar.

Time pulsing of the radar emission field 202 enables positional measurement for the cable 144. A repetition frequency of distinct radar emission field 202 pulses may be in the order of 20 Hz. The repetition frequency should be at least 0,2 Hz in order to detect the rocking effects of the dredging vessel 120 brought about by waves in the water column 102, having a characteristic time in the order of 10 sec. The frequency of the electromagnetic carrier waves in the radar emission field 202 may be in the order of 25 GHz.

During dredging operation, the weight of the suction tube 126 causes tension within the cable 144, forcing the cable 144 to be taut (i.e. essentially straight). Determining the kinematic parameters Q of the cable 144 may then comprise determining from the radar reflection field 204 an indication of a cable distance AD between a detector reference point A on the radar detector 154, and a cable region D on the cable 144. With the cable 144 being essentially straight and the cable suspension point E known, the cable distance AD for a particular cable region alone constitutes a parameter that unambiguously describes the orientation of the cable 144. The cable distance AD may for example be obtained by employing a radar system 150 having a phased array configuration (not shown) that allows imaging of a plane region perpendicular to the dredger hull 122, and parallel to the water surface 104 when the dredger has no inclination (called roll for vessels).

The action of irradiating the cable 144 with the radar emission field 202 may further comprise emitting an emission field main lobe 206 of the radar emission field 202 substantially perpendicular to a dredger hull 122 of the dredging vessel 120, toward the cable 144, and along a main detector axis 210 of the radar detector 154. In this way, the cable region D constitutes the closest cable region F with respect to the detector reference point A on the radar detector 154. Consequently, the cable distance AD is a shortest radar distance AF between the detector reference point A and the closest cable region F. By emitting the emission field main lobe 206 from the radar source 152 in a direction that is substantially perpendicular to the dredger hull 122 and toward the cable 144, the deflection of the cable 144 in the athwartship direction X perpendicular to the dredger hull 122 can be efficiently determined. The shortest radar distance AF between the radar detector reference point A and the closest cable region F is easily obtained, even from one-dimensional radar measurement, by converting the measured time delay of the earliest reflection signal using the light speed.

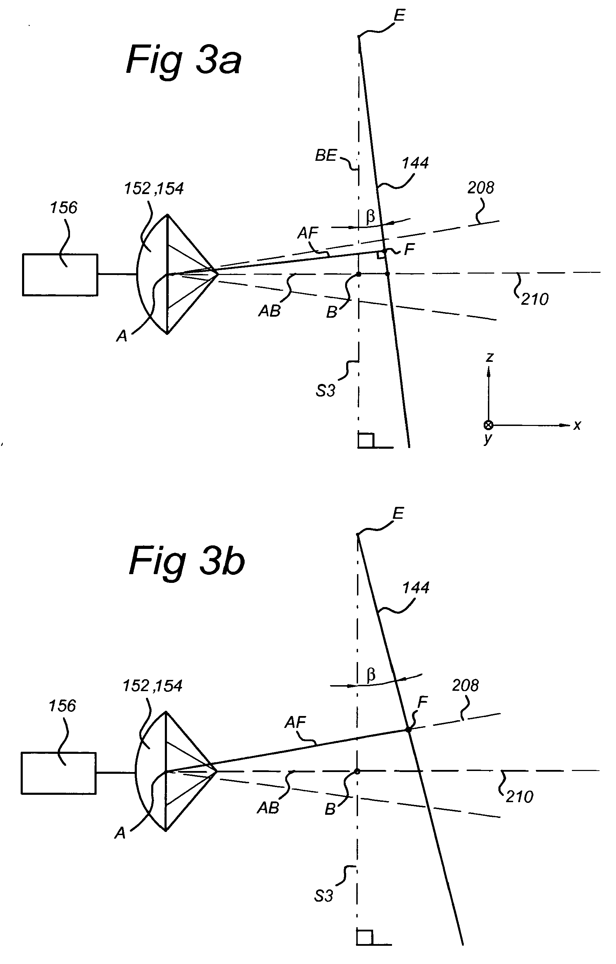

As shown in FIG.3A, the method may further exploit that the essentially straight cable 144 has a component along a vertical direction Z (which is perpendicular to both the athwartship direction X and the alongship direction Y), so that the method may be further simplified by: - determining an athwartship vertical cable heaving angle β, from the shortest radar distance AF, a projected horizontal distance AB between detector reference point A and the cable suspension point E, and a projected vertical distance BE between the detector reference point A and the cable suspension point E. The vertical cable suspension point projection B is the projection of the cable suspension point E along the vertical direction Z onto the main detector axis 210. The projected horizontal distance AB is then the distance between the detector reference point A and the vertical cable suspension point projection B. The athwartship vertical cable heaving angle β is an unambiguous parameter for describing the deflection of the essentially straight cable 144 (and thus also of the suction tube 126) in the athwartship direction X with respect to the vertical direction Z. From the assumption that the cable 144 is essentially straight, it follows that the first reflection signal received by the radar detector 154 originates from the closest cable region F. Assuming that the deflection of the cable 144 from the vertical direction Z is entirely within the athwartship direction X, the determination of the athwartship vertical cable heaving angle β is greatly simplified by the goniometric identity illustrated by FIG.3A. The action of determining the athwartship vertical cable heaving angle β may then comprise solving the following equation:

$$\beta = \arcsin\left(\frac{AF}{\sqrt{AB^2 + BE^2}}\right) - \arcsin\left(\frac{AB}{\sqrt{AB^2 + BE^2}}\right)$$

In this manner, the orientation of the cable 144 can be measured and combined with the known length L of the cable 144. The known location of the pivot connection 128 on the dredger hull 122 and the known length of the suction tube 126, can thus be combined with the determined athwartship vertical cable heaving angle β and cable length L, which is attached to the suction tube 126 at the known tube suspension point 136. This will yield accurate knowledge of the kinematic parameters Q (in this case the position, from which velocity and acceleration components may be derived) for the suction tube 126 in general, and the location of the suction head 134 in particular.

Beam widths of both the radar source 152 and the radar detector 154 are usually spatially limited. For a commonly known monostatic cone beam radar system 150, the beam width of a main field lobe of both radar source and detector 152, 154 may be described with a characteristic half beam width angle α (i.e. the characteristic radar half beam angle at which the local field intensity is half the maximum field intensity along the central axis; also referred to as the -3dB width). Several available radar detectors 154 have sharply defined spatial detection characteristics, with the detection boundaries of the detection field main lobe 208 falling off rapidly. The characteristic half beam width angle α may then sharply define the edge of the detection field main lobe 208. For such a radar detector 154, it can be assumed that an earliest received reflection from the cable 144 originates from the closest cable region F that is still within the detection field main lobe 208 defined by a sector bounded by the characteristic half beam width angle α. If the athwartship vertical cable heaving angle β is larger than the characteristic half beam width angle α, then the earliest strong reflection originates from the edge of the detection field main lobe 208, which is illustrated by FIG.3B. Here, it is assumed that cable reflections registered through any of the detection field side lobes are considerably weaker and may be suppressed. In any case, radar reflections from static objects in the radar field of view may be ignored or removed by image subtraction or masking. In this particular case that $\beta > \alpha$, the action of determining the athwartship vertical cable heaving angle $\beta$ may comprise solving an alternative equation:

$$\beta = \arctan\left(-\frac{AB - AF \cdot \cos(\alpha)}{BE - AF \cdot \sin(\alpha)}\right)$$

According to the alternative equation, the shortest radar distance AF is instead defined by the line between the detector reference point A and the closest cable region F located on a vertical edge of the detection field main lobe 208.

Further embodiments of the method may incorporate any or combination of the features described below.

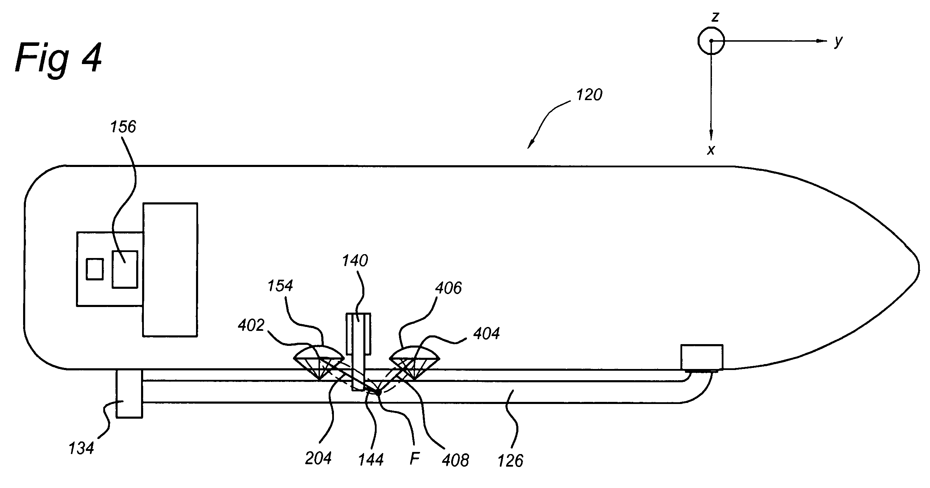

Positional determination of the cable 144 may be obtained by cross bearing measurements, which are illustrated in FIG.4. For this purpose, the radar detector 154 is provided at a vessel location 402 at the dredging vessel 120, and a further radar detector 406 may be provided at a further vessel location 404, different than the vessel location 402. The method may then comprise: - receiving a radar reflection field 204 reflected by the cable 144, using the radar detector 154; - receiving a further radar reflection field 406 reflected by the cable 144, using the further radar detector 406, and - determining the kinematic parameters Q from the radar reflection field 204, the further radar reflection field 406.

During dredging operation, the longitudinal tube axis S1 of the suction tube 126 will be tilted over the tube inclination angle $\chi$. As a result, the cable 144 will be tilted forward in the alongship direction Y of the dredging vessel 120, as is shown in FIG.1. The inclined tube position of the suction tube 126 corresponds to the operational configuration for which knowledge of the kinematic parameters Q of the suction tube 126 is most wanted. In order to maximize the reflection of the cable 144 toward the radar detector 154, both the radar source 152 and the radar detector 154 may be directed straight at the tilted cable 144, while both remain substantially pointing in the athwartship direction X. This orientation can be achieved by placing the radar system 150 as a whole at a position in the forward alongship direction Y that matches the expected forward displacement of the cable 144 when the suction tube 126 is in the inclined tube position. Thus, the method may comprise: - directing the emission field main lobe 206 at the cable 144, and - directing a main detector axis 210 of the radar detector 154 at the cable 144, when the suction tube 126 is in the inclined tube position. By aiming both the emission field main lobe 206 of the radar source 152 and the main detector axis 210 of the radar detector 154 at the tilted cable 144, the tilted cable 144 will reflect a significant radar reflection field 204 back toward the radar detector 154.

Alternatively or in addition, a three-dimensional expression for the deflection of the cable 144 in both the athwartship direction X and the alongship direction Y may be employed, in order to improve the accuracy of the corresponding method of determination the further kinematic parameters q of the suction tube 126. The following three-dimensional iteration method may be used for directly calculating the position of the tube suspension point 136 from measurement of the radar reflection field 204, without having to calculate the athwartship vertical heaving angle $\beta$. From the tube position, the position of the suction head 134 may be easily derived. The reference coordinates are the athwart direction X (parallel to the main detector axis 210), the alongship direction Y, and the vertical direction Z. The three-dimensional iteration method comprises the actions of

i) Selecting a starting position $K(x_k, y_k, z_k)$ for the tube suspension point 136 near the suction head 134. This starting position may be the result of a previously calculated position;

ii) Calculating a distance L' between the cable suspension point $E(x_e, y_e, z_e)$ and the tube suspension point $K(x_k, y_k, z_k)$;

iii) Determining a length difference $\Delta L = L' - L$ between the distance L' and a measured cable length L;

iv) Iteratively changing the tube inclination angle $\chi$ with respect to the pivot connection 128 and in the plane spanned by the alongship direction Y and the vertical direction Z, until the length difference $\Delta L$ becomes smaller than a selected value (a small value e.g. 1 cm);

v) Calculating a perpendicular distance AR' between the detector reference point $A(x_a, y_a, z_a)$ and a line segment EK along the cable 144 by known mathematical expressions, wherein the line segment EK runs from the cable suspension point $E(x_e, y_e, z_e)$ to the starting position $K(x_k, y_k, z_k)$ of the tube suspension point 136;

vi) Calculating a distance AE between the detector reference point $A(x_a, y_a, z_a)$ and the cable suspension point E $(x_e, y_e, z_e)$, by $AE = ((x_e - x_a)^2 + (y_e - y_a)^2 + (z_e - z_a)^2)^{0.5}$;

vii) Calculating a distance ER' between the cable suspension point $E(x_e, y_e, z_e)$ and an estimated point $R'(x_r, y_r, z_r)$, by $ER' = (AE^2 - AR'^2)^{0.5}$;

viii) Calculating the estimated point R' on the cable 144, by $x_r = x_e + (x_k - x_e) * ER' / L'$ and analogous expressions for $y_r$ and $z_r$;

ix) Calculating the deviation angle $\alpha'$ between the perpendicular line AR' (between the detector reference point A

($x_a$, $y_a$, $_a$) and the estimated point R') and the main detector axis 210, by $\alpha$' = arcos($x_r$ / AR');

x) Proceeding with actions xii) - xiii) if the deviation angle $\alpha$' is smaller than or equal to the characteristic half beam width angle $\alpha$, and equating the estimated point R' to an irradiated point R. Otherwise, proceeding with action xi);

xi) Moving the estimated point R' on the cable 144 toward a horizontal plane passing through the detector reference point A and spanned by the athwartship direction X and the alongship direction Y, by iteratively increasing ER' by a small amount (e.g. 1 cm) if the estimated point R' is located above the horizontal plane, or by iteratively decreasing ER' by a small amount (e.g. 1 cm) if the estimated point R' is located below the horizontal plane, and reiterating from action viii);

xii) Calculating a distance AR' between the detector reference point A($x_a$, $y_a$, $z_a$) and the irradiated point R, by AR' = (($x_r$ - $x_a$)$^2$ + ($y_r$ - $y_a$)$^2$ + ($z_r$ - $z_a$)$^2$ )$^{0.5}$;

xiii) Iteratively changing an athwartship tube inclination angle about the pivot connection 128 and in the plane spanned by the athwartship direction X and the vertical direction Z, and reiterating from action viii) until the calculated distance AR' equals the measured shortest radar distance AF;

These actions may be executed repeatedly after each measurement of the cable length L and/or of the shortest radar distance AF. The outcome for the position of the tube suspension point 136 - being an example of the further kinematic parameters q of the suction tube 126 - resulting from a previous iteration may be used as starting position K ($x_k$, $y_k$, $z_k$) of the tube suspension point 136 for a new iteration.

In general, the method(s) may be extended by using a measurement processing algorithm for averaging previous measurements, incorporating measurements from other measurement sources, and predicting future measurement. Accordingly, in the method, at least the following actions may be repeatedly executed at each of a discrete set of time values {0, 1, ..., t, t+1}: - irradiating the cable 144 with the radar emission field 202; - receiving a radar reflection field 204 reflected by the cable (144), using the radar detector 154, and - determining the kinematic parameters Q from the radar reflection field 204. In this way, the method may be augmented by - determining a running kinematic parameter average <Q_t|t> from the set of determined kinematic parameters {Q_0, Q_1, ..., Q_t} determined up to a time t; - calculating a running kinematic parameter average prediction <Q_t|t+1> at a further time t+1, and - adding further kinematic parameters Q_t+1 determined at the further time t+1 to a further running kinematic parameter average <Q_t+1|t+1>. Calculating a running kinematic parameter average from each subsequent measurement, which may for instance be implemented by a Gaussian or Kalman filter, will improve the determination accuracy of the kinematic parameters Q. By using such a running average, the effect of measurement errors may be reduced as time evolves.

The descriptions above are intended to be illustrative, not limiting. For example, a dredging vessel 120 may have a suction tube 126 consisting of multiple suction tube segments that are carried by as many cables 144 and gantries 140. A radar system 150 may be provided for each suction tube segment, and the kinematic parameters Q for each suction tube segment may be determined accordingly, for example in order to determine the position of the suction head 134. It will be apparent to the person skilled in the art that alternative and equivalent embodiments of the invention can be conceived and reduced to practice, without departing from the scope of the claims set out below.

LIST OF FIGURE ELEMENTS

102    water column
104    water surface
106    bottom surface
108    material
120    dredging vessel
122    dredger hull
124    hopper
126    suction tube
128    pivot connection
130    first tube end
132    second tube end
134    suction head
136    tube suspension point
138    tube goniometer
140    suspension device (gantry)
144    cable
146    cable region

| 148 | pressure sensor |
| 150 | radar system |
| 152 | radar source |
| 154 | radar detector |
| 156 | computer arrangement |

| A | detector reference point |
| B | vertical cable suspension point projection |
| D | cable region |
| E | cable suspension point |
| F | closest cable region |
| L | cable length |
| L' | temporary cable length estimation used to calculate the kinematic parameters iterative. |
| P | pressure |
| Q | kinematic parameters (for the cable) |
| q | further kinematic parameters (for the suction tube) |
| AB | projected horizontal distance |
| BE | projected vertical distance |
| AD | cable distance |
| AF | shortest radar distance |
| R | irradiated point |
| R' | estimated point |
| S1 | longitudinal tube axis |
| S2 | longitudinal vessel axis |
| X | athwartship direction |
| Y | alongship direction |
| Z | vertical direction |
| $\alpha$ | characteristic half beam width angle |
| $\beta$ | athwartship vertical cable heaving angle |
| $\chi$ | tube inclination angle |

| 202 | radar emission field |
| 204 | radar reflection field |
| 206 | emission field main lobe |
| 208 | detection field main lobe |
| 210 | main detector axis |

| 402 | vessel location |
| 404 | further vessel location |
| 406 | further radar detector |
| 408 | further radar reflection field |

**Claims**

1. Method for determining kinematic parameters Q of a cable (144) connecting a suction tube (126) to a dredging vessel (120), wherein the suction tube (126) is at a tube suspension point (136) connected by the cable (144) to a cable suspension point E on the dredging vessel (120),
   **characterized by**

   a) providing a radar source (152) and a radar detector (154) at the dredging vessel (120), the radar source (152) having a radar emission field (202) directed substantially at the cable (144);
   b) irradiating the cable (144) with the radar emission field (202);
   c) receiving a radar reflection field (204) reflected by the cable (144), using the radar detector (154), and
   d) determining the kinematic parameters Q from the radar reflection field (204).

2. Method according to claim 1, wherein the cable (144) is essentially straight during use, wherein determining the kinematic parameters Q comprises:

- determining from the radar reflection field (204) an indication of a cable distance AD between a detector reference point A on the radar detector (154), and a cable region D on the cable (144).

3. Method according to claim 2, wherein irradiating the cable (144) with the radar emission field (202) comprises emitting an emission field main lobe (206) of the radar emission field (202) substantially perpendicular to a dredger hull (122) of the dredging vessel (120), toward the cable (144), and along a main detector axis (210) of the radar detector (154), wherein the cable region D is the closest cable region F, and wherein the cable distance AD is a shortest radar distance AF between the detector reference point A and the closest cable region F .

4. Method according to claim 3, wherein the cable (144) has a vertical component in a vertical direction Z perpendicular to both an athwartship direction X and an alongship direction Y, the method comprising:

- determining an athwartship vertical cable heaving angle $\beta$, from the shortest radar distance AF, a projected horizontal distance AB between detector reference point A and the cable suspension point E, and a projected vertical distance BE between the detector reference point A and the cable suspension point E, and optionally

wherein determining the athwartship vertical cable heaving angle $\beta$ comprises solving an equation:

$$\beta = \arcsin\left(\frac{AF}{\sqrt{AB^2 + BE^2}}\right) - \arcsin\left(\frac{AB}{\sqrt{AB^2 + BE^2}}\right)$$

5. Method according to claim 4, wherein the detection field main lobe (208) has a characteristic half beam width angle $\alpha$, wherein determining the athwartship vertical cable heaving angle $\beta$ comprises solving an alternative equation:

$$\beta = \arctan\left(-\frac{AB - AF \cdot \cos(\alpha)}{BE - AF \cdot \sin(\alpha)}\right)$$

if the athwartship vertical cable heaving angle $\beta$ is larger than the characteristic half beam width angle $\alpha$.

6. Method according to any one of the claims 3 - 5, wherein the dredging vessel (120) comprises a gantry (140) by means of which the suction tube (126) is displaceable between a substantially horizontal rest position and an inclined tube position, wherein the method comprises:

- directing the emission field main lobe (206) at the cable (144), and
- directing a main detector axis (210) of the radar detector (154) at the cable (144), when the suction tube (126) is in the inclined tube position.

7. Method according to any one of the preceding claims, wherein the radar detector (154) is provided at a vessel location (402) on the dredging vessel (120), and wherein the method comprises:

- providing a further radar detector (406) at a further vessel location (404), different from the vessel location (402);
- receiving a radar reflection field (204) reflected by the cable (144), using the radar detector (154);
- receiving a further radar reflection field (408) reflected by the cable (144), using the further radar detector (406), and
- determining the kinematic parameters Q from the radar reflection field (204) and the further radar reflection field (408).

8. Method according to any one of the preceding claims, wherein the suction tube (126) comprises a plurality of suction tube segments, wherein each suction tube segment is pivotably interconnected with an adjacent suction tube segment, and is at a respective tube segment suspension point connected by a respective cable to a respective cable suspension point, wherein the actions of:

a) providing a respective radar source and a respective radar detector at the dredging vessel (120), the respective radar source having a respective radar emission field directed substantially at the respective cable;

b) irradiating the respective cable with the respective radar emission field;

c) receiving a respective radar reflection field reflected by the respective cable, using the respective radar detector, and

d) determining the respective kinematic parameters Q' from the respective radar reflection field,

are executed for each subsequent suction tube segment, starting from a first suction tube segment that is at a first tube end (130) connected to a dredger hull (122) of the dredging vessel (120).

9. Computer program product configured to provide instructions to carry out a method according to any one of the claims 1 - 8, when loaded on a computer arrangement (156).

10. Computer readable medium, comprising a computer program product according to claim 9.

11. Dredging vessel (120), comprising a suction tube (126) that is at a tube suspension point (136) connected by a cable (144) to a cable suspension point E on the dredging vessel (120),
**characterized in that**
the dredging vessel (120) comprises a radar source (152) and a radar detector (154), wherein the radar source (152) is arranged for generating a radar emission field (202) directed substantially at the cable (144), and wherein the radar detector (154) is arranged for receiving a radar reflection field (204) reflected by the cable (144), and wherein the dredging vessel (120) comprises a computer arrangement (156) configured for determining kinematic parameters Q of the cable (144) from the radar reflection field (204).

12. Dredging vessel (120) according to claim 11, wherein the dredging vessel (120) is provided with means for determining a cable length L between the tube suspension point (136) and the cable suspension point E, and wherein the computer arrangement (156) is configured for determining the kinematic parameters Q from the cable length L in addition to the radar reflection field (204), and optionally
wherein the suction tube (126) comprises at least one tube goniometer (138) for determining an inclination angle $\chi$ between a longitudinal tube axis S1 of the suction tube (126) and a longitudinal vessel axis S2 of the dredger hull (122), for the suction tube (126) in the inclined tube position, and wherein the computer arrangement (156) is configured for determining the kinematic parameters Q from the inclination angle $\chi$ in addition to the radar reflection field (204).

13. Dredging vessel (120) according to any one of the claims 11 - 12, wherein the suction tube (126) comprises a pressure sensor (148) for measuring a pressure P near a suction head (134) at a second tube end (132) of the suction tube (126), and wherein the computer arrangement (156) is configured for calculating a depth of the suction head (134) and for determining the kinematic parameters Q from the calculation depth in addition to the radar reflection field (204).

14. Dredging vessel (120) according to any one of the claims 11 - 13, wherein the radar detector (154) is provided at a vessel location (402) on the dredging vessel (120), and wherein the dredging vessel (120) comprises a further radar detector (406) at a further vessel location (404) different from the vessel location (402), wherein the further radar detector (406) is arranged for receiving a further radar reflection field (408) reflected by the cable (144), and wherein the computer arrangement (156) is configured for determining kinematic parameters Q from both the radar reflection field (204) and the further radar reflection field (408).

15. Dredging vessel (120) according to any one of claims 11 - 14, wherein the suction tube (126) comprises a plurality of suction tube segments, wherein each suction tube segment is pivotably interconnected with an adjacent suction tube segment, and is at a respective tube segment suspension point connected by a respective cable to a respective cable suspension point, the dredging vessel (120) comprising respective radar sources and respective radar detectors, wherein each respective radar source is arranged for generating a radar emission field directed substantially at the respective cable, and wherein the respective radar detector is arranged for receiving a radar reflection field reflected by the respective cable, and wherein the computer arrangement (156) is configured for determining kinematic parameters Q' of a respective cable of each subsequent suction tube segment, starting from a first suction tube segment that is at a first tube end (130) connected to a dredger hull (122) of the dredging vessel (120).

**Patentansprüche**

1. Verfahren zur Bestimmung der kinematischen Parameter Q eines Kabels (144), welches ein Saugrohr (126) mit einem Baggerschiff (120) verbindet, wobei das Saugrohr (126) an einem Rohraufhängepunkt (136) über das Kabel (144) mit einem Kabelaufhängepunkt E am Baggerschiff (120) verbunden ist, **gekennzeichnet durch**,

   a) Bereitstellung einer Radarquelle (152) und eines Radardetektors (154) am Baggerschiff (120), wobei die Radarquelle (152) ein Radarstrahlungsfeld (202) aufweist, das im Wesentlichen auf das Kabel (144) gerichtet ist;
   b) Bestrahlung des Kabels (144) mit dem Radarstrahlungsfeld (202);
   c) Empfangen eines **durch** das Kabel (144) reflektierten Radarreflektionsfeldes (204) **durch** Verwendung des Radardetektors (154), und
   d) Bestimmung der kinematischen Parameter Q aus dem Radarreflektionsfeld (204).

2. Verfahren nach Anspruch 1, wobei das Kabel (144) während seiner Verwendung im Wesentlichen gerade ist, wobei die Bestimmung der kinematischen Parameter Q umfasst:

   - Bestimmen einer Angabe des Kabelabstandes AD zwischen einem Detektorreferenzpunkt A am Radardetektor (154) und einem Kabelbereich D am Kabel (144) aus dem Radarreflektionsfeld (204).

3. Verfahren nach Anspruch 2, wobei das Bestahlen des Kabels (144) mit dem Radarstrahlungsfeld (202) das Emittieren einer Strahlungsfeldhauptkeule (206) des Radarstrahlungsfeldes (202) im Wesentlichen rechtwinklig zur Baggerhöhle (122) des Baggerschiffs (120), in Richtung des Kabels (144) und entlang einer Hauptdetektorachse (210) des Radardetektors umfasst, wobei der Kabelbereich D die nächste Kabelregion F ist und wobei der Kabelabstand AD die kürzeste Radarentfernung AF zwischen dem Detektorreferenzpunkt A und der nächsten Kabelregion F ist.

4. Verfahren nach Anspruch 3, wobei das Kabel (144) eine vertikale Komponente in einer vertikalen Richtung Z aufweist, die rechtwinklig zu beiden einer Querschiffsrichtung X und einer Längsschiffsrichtung Y ausgerichtet ist, das Verfahren aufweisend:

   - Bestimmen eines querschiffs schwankenden vertikalen Kabelwinkels $\beta$, vom kürzesten Radarabstand AF ausgehend, eines projizierten horizontalen Abstandes AB zwischen dem Detektorreferenzpunkt A und dem Kabelaufhängepunkt E, und eines projizierten vertikalen Abstandes BE zwischen dem Detektorreferenzpunkt A und dem Kabelaufhängepunkt E, und wahlweise wobei das Bestimmen des querschiffs schwankenden vertikalen Kabelwinkels $\beta$ umfasst das Lösen einer Gleichung:

$$\beta = \arcsin\left(\frac{AF}{\sqrt{AB^2 + BE^2}}\right) - \arcsin\left(\frac{AB}{\sqrt{AB^2 + BE^2}}\right)$$

5. Verfahren nach Anspruch 4, wobei die Detektionsfeldhauptkeule (208) einen charakteristischen halben Strahlbreitenwinkel $\alpha$ aufweist, wobei das Bestimmen des querschiffs wogenden vertikalen Kabelwinkels $\beta$ das Lösen einer alternativen Gleichung umfasst:

$$\beta = \arctan\left(-\frac{AB - AF \cdot \cos(\alpha)}{BE - AF \cdot \sin(\alpha)}\right)$$

sofern der querschiffs schwankende vertikale Kabelwinkel $\beta$ größer ist als der charakteristische halbe Strahlbreitenwinkel $\alpha$.

6. Verfahren nach einem der Ansprüche 3 - 5, wobei das Baggerschiff (120) einen Brückenkran (140) aufweist, mittels dem das Saugrohr (126) zwischen einer im Wesentlichen horizontalen Ruhelage und einer geneigten Rohrposition verstellbar ist, wobei das Verfahren aufweist:

- Ausrichten der Strahlungsfeldhauptkeule (206) auf das Kabel (144), und
- Ausrichten einer Hauptdetektorachse (210) des Radardetektors (154) auf das Kabel (144), wenn das Saugrohr (126) in seiner geneigten Rohrposition ist.

7. Verfahren nach einem der vorgehenden Ansprüche, wobei der Radardetektor (154) an einer Schiffsposition (402) an dem Baggerschiff (120) vorgesehen ist, und wobei das Verfahren umfasst:

- Bereitstellen eines weiteren Radardetektors (406) an einer weiteren Schiffsposition (404), abweichend von der Schiffsposition (402);
- Empfangen eines Radarreflektionsfeldes (204), welches durch das Kabel (144) reflektiert wird, bei Verwendung des Radardetektors (154);
- Empfangen eines weiteren Radarreflektionsfeldes (408), welches durch das Kabel (144) reflektiert wird, bei Verwendung des weiteren Radardetektors (406), und
- Bestimmen der kinematischen Parameter Q aus dem Radarreflektionsfeld (204) und dem weiteren Radarreflektionsfeld (408).

8. Verfahren nach einem der vorgehenden Ansprüche, wobei das Saugrohr (126) eine Vielzahl von Saugrohrabschnitten aufweist, wobei jeder Saugrohrabschnitt drehbar mit einem benachbarten Saugrohrabschnitt verbunden ist, und an einem jeweiligen Rohraufhängepunkt durch ein jeweiliges Kabel mit einem jeweiligen Kabelaufhängepunkt verbunden ist, wobei die Handlungen des:

a) Bereitstellen einer jeweiligen Radarquelle und eines jeweiligen Radardetektors am Baggerschiff (120), die jeweilige Radarquelle ein jeweiliges Radarstrahlungsfeld aufweist, welches im Wesentlichen auf das jeweilige Kabel gerichtet ist;
b) Bestrahlen des jeweiligen Kabels mit dem jeweiligen Radarstrahlungsfeld;
c) Empfangen eines jeweiligen Radarreflektionsfeldes, welches durch das jeweilige Kabel reflektiert wurde, bei Verwendung eines jeweiligen Radardetektors, und
d) Bestimmung der jeweiligen kinematischen Parameter Q' aus dem jeweiligen Radarreflektionsfeld,

für jedes nachfolgende Saugrohrsegment ausgeführt werden, ausgehend von einem ersten Saugrohrabschnitt, das an einem ersten Rohrende (130) mit dem Baggerrumpf (122) des Baggerschiffes (120) verbunden ist.

9. Computerprogrammprodukt konfiguriert, um Instruktionen zum Ausführen eines Verfahrens gemäß einem der Ansprüche 1 - 8 bereitzustellen, wenn dieses auf einer Computeranordnung (156) geladen ist.

10. Computerlesbares Medium, umfassend ein Computerprogrammprodukt gemäß Anspruch 9.

11. Baggerschiff (120), umfassend ein Saugrohr (126), das an einem Rohraufhängepunkt (136) durch ein Kabel (144) mit einem Kabelaufhängepunkt E am Baggerschiff (120) verbunden ist,
**dadurch gekennzeichnet, dass**
das Baggerschiff (120) eine Radarquelle (152) und einen Radardetektor (154) aufweist, wobei die Radarquelle (152) zum Erzeugen eines Radaremissionsfeldes (202) eingerichtet ist, welches im Wesentlichen auf das Kabel (144) gerichtet ist, und wobei der Radardetektor (154) zum Empfangen eines Radarreflektionsfeldes (204) eingerichtet ist, welches durch das Kabel (144) reflektiert wird, und wobei das Baggerschiff (120) eine Computeranordnung (156) aufweist, die zum Bestimmen der kinematischen Parameter Q des Kabels (154) aus dem Radarreflektionsfeld (204) eingerichtet ist.

12. Baggerschiff (120) nach Anspruch 11, wobei das Baggerschiff (120) mit Mitteln zum Bestimmen der Kabellänge L zwischen dem Rohraufhängepunkt (136) und dem Kabelaufhängepunkt E versehen ist, und wobei die Computeranordnung (156) zur Bestimmung der kinematischen Parameter Q aus der Kabellänge L zusätzlich zu dem Radarreflektionsfeld (204) eingerichtet ist, und wahlweise
wobei das Saugrohr (126) wenigstens ein Rohrgoniometer (138) zum Bestimmen eines Neigungswinkels $\chi$ zwischen einer longitudinalen Rohrachse S1 des Saugrohres (126) und einer longitudinalen Schiffsachse S2 des Baggerrumpfes (122) für das Saugrohr (126) in seiner geneigten Rohrposition aufweist, und wobei die Computeranordnung (156) zum Bestimmen der kinematischen Parameter Q aus dem Neigungswinkel $\chi$ zusätzlich zu dem Radarreflektionsfeld (204) konfiguriert ist.

13. Baggerschiff (120) nach einem der Ansprüche 11 - 12, wobei das Saugrohr (126) einen Drucksensor (148) zum Messen eines Druckes P in der Nähe eines Saugkopfes (134) an einem zweiten Rohrende (132) des Saugrohres (126) aufweist, und wobei die Computeranordnung (156) zur Berechnung einer Tiefe des Saugkopfes (134) und zur Bestimmung der kinematischen Parameter Q aus der Berechnung der Tiefe zusätzlich zu dem Radarreflektionsfeld (204) konfiguriert ist.

14. Baggerschiff (120) nach einem der Ansprüche 11 - 13, wobei der Radardetektor (154) an einer Schiffsposition (402) am Baggerschiff (120) vorgesehen ist, und wobei das Baggerschiff (120) einen weiteren Radardetektor (406) an einer weiteren Schiffsposition (404) abweichend von der Schiffsposition (402) aufweist, wobei der weitere Radardetektor (406) zum Empfangen eines weiteren Radarreflektionsfeldes (408), welches durch das Kabel (144) reflektiert wird, eingerichtet ist, und wobei die Computeranordnung (156) zur Bestimmung der kinematischen Parameter Q aus beiden dem Radarreflektionsfeld (204) und dem weiteren Radarreflektionsfeld (408) konfiguriert ist.

15. Baggerschiff (120) nach einem der Ansprüche 11 - 14, wobei das Saugrohr (126) eine Vielzahl von Saugrohrabschnitten aufweist, wobei jeder Saugrohrabschnitt drehbar mit einem benachbarten Saugrohrabschnitt verbunden ist, und an einem jeweiligen Rohrabschnittsaufhängepunkt durch ein jeweiliges Kabel mit einem jeweiligen Kabelaufhängepunkt verbunden ist, das Baggerschiff (120) aufweisend jeweilige Radarquellen und jeweilige Radardetektoren, wobei jede jeweilige Radarquelle zum Erzeugen eines Radarstrahlungsfeldes im Wesentlichen direkt auf das jeweilige Kabel eingerichtet ist, und wobei der jeweilige Radardetektor zum Empfang eines Radarreflektionsfeldes, welches durch das jeweilige Kabel reflektiert wird, eingerichtet ist, und wobei die Computeranordnung (156) zur Bestimmung der kinematischen Parameter Q' eines jeweiligen Kabels jedes nachfolgenden Saugrohrabschnittes konfiguriert ist, ausgehend vom ersten Saugrohrabschnitt, das an einem ersten Rohrende (130) mit dem Baggerrumpf (122) des Baggerschiffes (120) verbunden ist.

## Revendications

1. Procédé de détermination de paramètres cinématiques Q d'un câble (144) reliant un tube d'aspiration (126) à un navire de dragage (120), dans lequel le tube d'aspiration (126) se trouve au niveau d'un point de suspension de tube (136) relié par le câble (144) à un point de suspension de câble E sur le navire de dragage (120), **caractérisé par** le fait de

a) fournir une source de radar (152) et un détecteur de radar (154) au niveau du navire de dragage (120), la source de radar (152) ayant un champ d'émission de radar (202) dirigé essentiellement au niveau du câble (144) ;
b) irradier le câble (144) avec le champ d'émission de radar (202) ;
c) recevoir un champ de réflexion de radar (204) réfléchi par le câble (144), en utilisant le détecteur de radar (154), et
d) déterminer les paramètres cinématiques Q à partir du champ de réflexion de radar (204).

2. Procédé selon la revendication 1, dans lequel le câble (144) est essentiellement droit pendant l'utilisation, dans lequel la détermination des paramètres cinématiques Q comprend :

la détermination, à partir du champ de réflexion de radar (204), d'une indication d'une distance de câble AD entre un point de référence de détecteur A sur le détecteur de radar (154) et une zone de câble D sur le câble (144).

3. Procédé selon la revendication 2, dans lequel l'irradiation du câble (144) avec le champ d'émission de radar (202) comprend l'émission d'un lobe principal de champ d'émission (206) du champ d'émission de radar (202) essentiellement perpendiculaire à une coque de dragueur (122) du navire de dragage (120), vers le câble (144), et le long d'un axe de détecteur principal (210) du détecteur de radar (154), dans lequel la zone de câble D est la zone de câble la plus proche F, et dans lequel la distance de câble AD est la distance de radar la plus courte AF entre le point de référence de détecteur A et la zone de câble la plus proche F.

4. Procédé selon la revendication 3, dans lequel le câble (144) possède un composant vertical dans une direction verticale Z perpendiculaire à la fois à une direction X par le travers et à une direction Y le long du navire, le procédé comprenant le fait de :

déterminer un angle $\beta$ de soulèvement de câble vertical par le travers, à partir de la distance de radar la plus courte AF, une distance horizontale projetée AB entre le point de référence de détecteur A et le point de suspension de câble E, et une distance verticale projetée BE entre le point de référence de détecteur A et le point de suspension de câble E, et éventuellement
dans lequel la détermination de l'angle β de soulèvement de câble vertical par le travers comprend la résolution d'une équation :

$$\beta = \arcsin\left(\frac{AF}{\sqrt{AB^2 + BE^2}}\right) - \arcsin\left(\frac{AB}{\sqrt{AB^2 + BE^2}}\right)$$

5. Procédé selon la revendication 4, dans lequel le lobe principal de champ de détection (208) a un angle α de largeur de demi-faisceau caractéristique, dans lequel la détermination de l'angle de soulèvement de câble vertical par le travers comprend la résolution d'une équation alternative :

$$B = \arcsin\left(-\frac{AB - AF \cdot \cos(\alpha)}{BE - AF \cdot \sin(\alpha)}\right)$$

si l'angle β de soulèvement de câble vertical par le travers est plus grand que l'angle α de largeur de demi-faisceau caractéristique.

6. Procédé selon l'une quelconque des revendications 3-5, dans lequel le navire de dragage (120) comprend un portique (140) au moyen duquel le tube d'aspiration (126) peut être déplacé entre une position de repos essentiellement horizontale et une position de tube inclinée, dans lequel le procédé comprend le fait de :

diriger le lobe principal de champ d'émission (206) au niveau du câble (144), et
diriger un axe de détection principal (210) du détecteur de radar (154) au niveau du câble (144), lorsque le tube d'aspiration (126) est dans la position de tube inclinée.

7. Procédé selon l'une quelconque des revendications précédentes, dans lequel le détecteur de radar (154) est pourvu à un emplacement de navire (402) sur le navire de dragage (120), et dans lequel le procédé comprend le fait de :

fournir un détecteur de radar supplémentaire (406) au niveau d'un emplacement de navire supplémentaire (404), différent de l'emplacement de navire (402) ;
recevoir un champ de réflexion de radar (204) réfléchi par le câble (144), en utilisant le détecteur de radar (154) ;
recevoir un champ de réflexion de radar supplémentaire (408) réfléchi par le câble (144), en utilisant le détecteur de radar supplémentaire (406), et
déterminer les paramètres cinématiques Q à partir du champ de réflexion de radar (204) et du champ de réflexion de radar supplémentaire (408).

8. Procédé selon l'une quelconque des revendications précédentes, dans lequel le tube d'aspiration (126) comprend une pluralité de segments de tube d'aspiration, dans lequel chaque segment de tube d'aspiration est interconnecté en pivotement avec un segment de tube d'aspiration adjacent, et se trouve au niveau d'un point de suspension de segment de tube respectif relié par un câble respectif à un point de suspension de câble respectif, dans lequel les actions consistent à :

a) fournir une source radar respective et un détecteur de radar respectif au niveau du navire de dragage (120), la source de radar respective ayant un champ d'émission de radar respectif dirigé essentiellement au niveau du câble respectif ;
b) irradier le câble respectif avec le champ d'émission de radar respectif ;
c) recevoir un champ de réflexion de radar respectif réfléchi par le câble respectif, en utilisant le détecteur de radar respectif, et
d) déterminer les paramètres cinématiques respectifs Q' à partir du champ de réflexion de radar respectif,

sont exécutées pour chaque segment de tube d'aspiration subséquent, en commençant par un premier segment de tube d'aspiration qui est au niveau d'une première extrémité de tube (130) reliée à une coque de dragueur (122) du navire de dragage (120).

9. Produit de programme informatique configuré pour fournir des instructions afin d'exécuter un procédé selon l'une quelconque des revendications 1 à 8, lorsqu'il est chargé sur un dispositif informatique (156).

10. Support lisible par ordinateur, comprenant un produit de programme informatique selon la revendication 9.

11. Navire de dragage (120), comprenant un tube d'aspiration (126) qui se trouve au niveau d'un point de suspension de tube (136) relié par un câble (144) à un point de suspension de câble E sur le navire de dragage (120), **caractérisé en ce que**

le navire de dragage (120) comprend une source de radar (152) et un détecteur de radar (154), dans lequel la source de radar (152) est agencée pour générer un champ d'émission de radar (202) dirigé essentiellement au niveau du câble (144), et dans lequel le détecteur de radar (154) est agencé pour recevoir un champ de réflexion de radar (204) réfléchi par le câble (144), et dans lequel le navire de dragage (120) comprend un dispositif informatique (156) configuré pour déterminer des paramètres cinématiques Q du câble (144) à partir du champ de réflexion de radar (204).

12. Navire de dragage (120) selon la revendication 11, dans lequel le navire de dragage (120) est pourvu de moyens pour déterminer une longueur de câble L entre le point de suspension de tube (136) et le point de suspension de câble E, et dans lequel le dispositif informatique (156) est configuré pour déterminer les paramètres cinématiques Q à partir de la longueur de câble L en plus du champ de réflexion de radar (204), et éventuellement

dans lequel le tube d'aspiration (126) comprend au moins un goniomètre de tube (138) pour déterminer un angle d'inclinaison $\chi$ entre un axe de tube longitudinal S1 du tube d'aspiration (126) et un axe de navire longitudinal S2 de la coque de dragueur (122), pour le tube d'aspiration (126) dans la position de tube inclinée, et dans lequel le dispositif informatique (156) est configuré pour déterminer les paramètres cinématiques Q à partir de l'angle d'inclinaison $\chi$ en plus du champ de réflexion de radar (204).

13. Navire de dragage (120) selon l'une quelconque des revendications 11 à 12, dans lequel le tube d'aspiration (126) comprend un capteur de pression (148) pour mesurer une pression P à proximité d'une tête d'aspiration (134) au niveau d'une deuxième extrémité de tube (132) du tube d'aspiration (126), et dans lequel le dispositif informatique (156) est configuré pour calculer une profondeur de la tête d'aspiration (134) et pour déterminer les paramètres cinématiques Q à partir de la profondeur de calcul en plus du champ de réflexion de radar (204).

14. Navire de dragage (120) selon l'une quelconque des revendications 11 à 13, dans lequel le détecteur de radar (154) est pourvu au niveau d'un emplacement de navire (402) sur le navire de dragage (120), et dans lequel le navire de dragage (120) comprend un détecteur de radar supplémentaire (406) au niveau d'un emplacement de navire supplémentaire (404) différent de l'emplacement de navire (402), dans lequel le détecteur de radar supplémentaire (406) est agencé pour recevoir un champ de réflexion de radar supplémentaire (408) réfléchi par le câble (144), et dans lequel le dispositif informatique (156) est configuré pour déterminer des paramètres cinématiques Q à la fois à partir du champ de réflexion de radar (204) et du champ de réflexion de radar supplémentaire (408).

15. Navire de dragage (120) selon l'une quelconque des revendications 11 à 14, dans lequel le tube d'aspiration (126) comprend une pluralité de segments de tube d'aspiration, dans lequel chaque segment de tube d'aspiration est interconnecté en pivotement avec un segment de tube d'aspiration adjacent, et se trouve au niveau d'un point de suspension de segment de tube respectif relié par un câble respectif à un point de suspension de câble respectif, le navire de dragage (120) comprenant des sources de radar respectives et des détecteurs de radar respectifs, dans lequel chaque source de radar respective est agencée pour générer un champ d'émission de radar dirigé essentiellement au niveau du câble respectif, et dans lequel le détecteur de radar respectif est agencé pour recevoir un champ de réflexion de radar réfléchi par le câble respectif, et dans lequel le dispositif informatique (156) est configuré pour déterminer des paramètres cinématiques Q' d'un câble respectif de chaque segment de tube d'aspiration subséquent, en commençant par un premier segment de tube d'aspiration qui est au niveau d'une première extrémité de tube (130) reliée à une coque de dragueur (122) du navire de dragage (120).

Fig 1

Fig 2

EP 2 535 466 B1

Fig 3a

Fig 3b

Fig 4

**EP 2 535 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0009516 A1